# NEUE EUROPÄISCHE PATENTSCHRIFT

(11) **EP 0 517 176 B2**
(45) Veröffentlichungstag und Bekanntmachung des Hinweises auf die Entscheidung über den Einspruch: **12.07.2000**
(45) Hinweis auf die Patenterteilung: 20.09.1995
(21) Anmeldenummer: 92109358.9
(22) Anmeldetag: 03.06.1992
(51) Int. Cl.: B24B 9/10

(54) **Verfahren und Vorrichtung zum Vorbereiten von Glasscheiben für eine Mehrfachverglasung mit mindestens einer beschichteten Glasscheibe**
Method and apparatus for preparing glass sheets for a multiple glazed window with at least one coated glass panel
Procédé et dispositif pour la préparation de feuilles de verre pour un vitrage multiple comportant au moins une vitre revêtue

(30) Priorität: 04.06.1991 DE 4118241
(43) Veröffentlichungstag der Anmeldung: 09.12.1992
(73) Patentinhaber: HEGLA Fahrzeug- u. Maschinenbau GmbH & Co. KG, D-37688 Beverungen (DE)
(72) Erfinder: Glaser, Siegfried, c/o Hegla Fahrzeug- und, W-3472 Beverungen 1 (DE)
(74) Vertreter: Patentanwälte Dr. Solf & Zapf

(56) Entgegenhaltungen:
- EP-A- 0 048 334
- EP-A- 0 086 716
- EP-A- 0 095 228
- EP-A- 0 165 232
- EP-A- 0 315 202
- EP-A- 0 603 152
- DE-A- 3 408 675
- DE-A- 4 342 067
- DE-C- 3 403 682
- GB-A- 2 117 290

## Beschreibung

Die Erfindung betrifft Verfahren und Vorrichtungen zum Vorbereiten von Glasscheiben für eine Mehrfachverglasung mit mindestens einer beschichteten Glasscheibe. Wie im folgenden dargelegt ist, ist es bei einer solchen Vorbereitung notwendig, in den für den Randverbund der Scheiben vorgesehenen Bereichen die Dünnschichtmaterialien von den beschichteten Scheiben zu entfernen bzw. abzutragen.

Flachgläser werden zur Verbesserung ihrer Funktionen, vor allem ihrer wärmedämmenden und reflektierenden Eigenschaften mit dünnen reflektierenden Metallschichten versehen. Dabei handelt es sich um aus einer Haftschicht, einer oder mehreren Funktionsschichten und einer Deckschicht bestehende Mehrfachschichten. Zum Aufbau dieser Schichten werden Metalloxide, Metalle, Halbleiter oder ähnliche Materialien eingesetzt. Die Haftschicht dient als Haftvermittler zwischen Funktionsschicht und Glasoberfläche. Die empfindlichen Funktionsschichten, die je nach der gewünschten Wirkung vorgegeben werden, werden durch die zumeist aus einer Metalloxidschicht bestehenden Deckschicht primär vor chemischen Einflüssen geschützt.

Abhängig von der zu erzielenden Funktion bzw. dem vorgesehenen Einsatz werden die unterschiedlichsten Schichtaufbauten verwendet, die z.B. farbneutrale Wärmedämmschichten, funktionale farbige Sonnenschutzschichten, Schichten mit kombinierter Wärmedämm- und Sonnenschutzfunktion, transparente hochleitfähige sowie wärmereflektierende Schichten beispielsweise für Scheiben in Kraftfahrzeugen und Spiegel- und Schutzschichten umfassen.

Das Aufbringen dieser Schichten erfolgt in verschiedenen industriellen Prozeßanlagen. Um ein optimales Aufbringen der Schichten und eine gute Weiterverarbeitung der beschichteten Scheiben zu gewährleisten, werden vorzugsweise Flachglasscheiben bzw. Flachglasrohtafeln maximaler handelsüblicher Größe von 6,100 x 3,250 m beschichtet. Die großflächig beschichteten Scheiben werden nach dem Beschichtungsvorgang durch entsprechende Verpackung zum Transport zu einer beliebigen Weiterverarbeitungsstätte vorbereitet, wo aus den Flachgläsern die eigentlichen Funktionselemente, z.B. Isolierglas, hergestellt werden.

Dabei werden in Abhängigkeit von der zu erzielenden Funktion entsprechend zugeschnittene, beschichtete Einzelscheiben mit meist unbeschichteten Einzelscheiben zu Funktionsgläsern zusammengebaut. Die empfindliche Schicht der beschichteten Scheibe ist immer auf der dem Innern des Funktionsglases zugewandten Seite und dabei wahlweise auf der Außen- oder Innenscheibe oder auch beiden Scheiben vorgesehen.

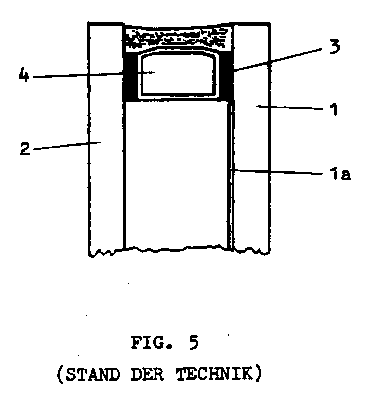

Die Langzeitstabilität der Isolierglaseinheit wird bekanntermaßen durch die Qualität des Randverbundes bestimmt. Die Haftungseigenschaften der hierzu entwickelten und verwendeten Randverbundkleber sind ausschließlich für Glas und nicht für die genannten Beschichtungen ausgelegt. Aus diesem Grund muß generell am Scheibenrand die Beschichtung in einer Breite von etwa 10mm minus 2mm vollständig entfernt werden. Ansonsten kann keine sichere Haftung des Isolierglasdichtstoffes auf den Gläsern gewährleistet werden, kann eine Schichtverletzung am Scheibenrand durch die natürliche Pumpbewegung der Isolierglasscheibe nicht ausgeschlossen werden, kann einer Unterwanderung der einzelnen Schichten durch Feuchtigkeit nicht vorgebeugt werden und ist eine Korrosion der Silber- oder anderen Metallschichten nicht vermeidbar. Ein entsprechender üblicher Randverbund ist in Fig.5 dargestellt, wobei eine beschichtete Scheibe 1 und eine nicht beschichtete Scheibe 2 mittels eines Klebers 3 und eines Abstandskörpers 4 verbunden sind. Im Bereich des Randverbundes ist die mit 1a gekennzeichnete Beschichtung der Scheibe 1 entfernt worden.

Die Randentschichtung der beschichteten Einzelscheiben erfolgt gegenwärtig mit folgenden Verfahren bzw. Verfahrensvorrichtungen.

Beim Entfernen mittels Autogenflamme wird der Randbereich der Scheibe mit einer kleinen Brennerdüse abgefahren, wobei der Schichtaufbau über die thermische Einwirkung aufgelöst wird. Die dabei entstehenden Rückstände müssen durch geeignete Reinigungsverfahren dann rückstandslos entfernt werden. Bei diesem Verfahren erfolgt eine nachteilige hohe thermische Beanspruchung der Glaskanten. Hierdurch kann es bei nicht korrekter Handhabung oder unsachgemäßem Einbau des fertigen Elements zu Glasbruch kommen.

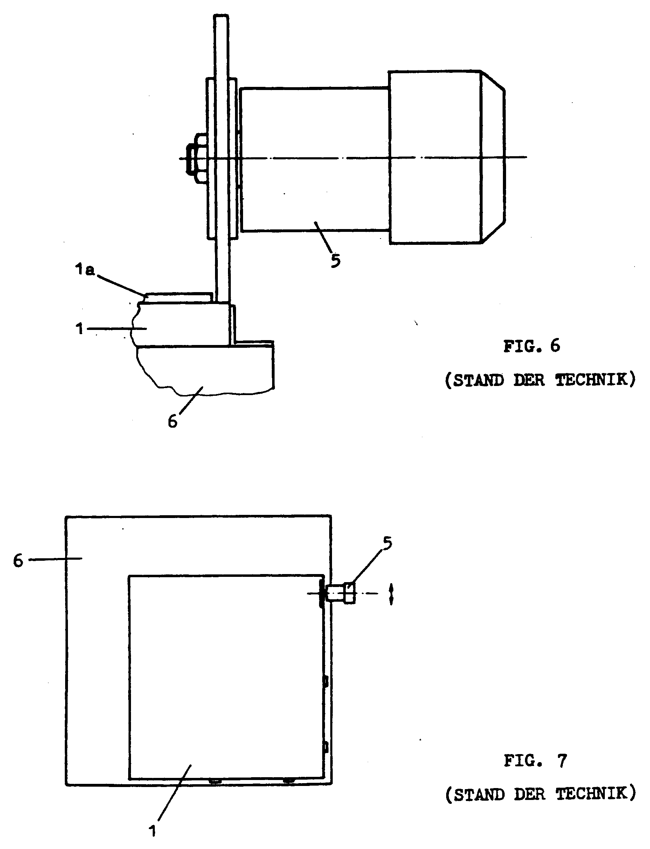

Bei der Randentschichtung durch mechanisches Abtragen werden alle Glaskanten einzeln mit einer geeigneten etwa 10mm breiten Schleifscheibe abgefahren und dabei werden sämtliche Schichten bis auf die Glasoberfläche abgetragen. Eine entsprechende Anordnung ist in den Figuren 6 und 7 dargestellt, wobei eine horizontal oder vertikal auf einem Tisch 6 fixierte Glasscheibe 1 im Randbereich mit einer durch 5 gekennzeichneten Schleifvorrichtung mit Schleifscheibe bearbeitet wird. Anstelle einer Schleif- und Polierscheibe kann auch ein geeignetes Schleif- oder Polierband eingesetzt werden.

Beim Abtragen der Schichten durch Sandstrahlen mittels eines bestimmten Strahlgutes muß letzeres sehr definiert und unter einem genau eingestellten Winkel zur Glasoberfläche aufgebracht werden. Hinzu kommen der nachteilige hohe Staubanfall und die Gefahr einer relativ leichten Beschädigung der Glasoberfläche.

Das üblicherweise angewandte Verfahren besteht im Entfernen der Schichten an den bereits auf Endmaß zugeschnittenen Scheiben durch Abschleifen sämtlicher Außenränder. Hierbei wird die Glasscheibe in einem separaten Fertigungsprozeß bearbeitet, wobei die einzelne Scheibe üblicherweise entweder vertikal oder horizontal in einer Vorrichtung lagemäßig fixiert wird und anschließend die Ränder aufeinanderfolgend abgefahren werden. Hierbei dient als Referenzkante die jeweilige Glaskante.

Die Vorrichtungen bzw. Anlagen werden manuell, teilautomatisch sowie auch automatisch betrieben. Bei allen Vorrichtungen bzw. Verfahren besteht die Problematik, daß mit dem Schleifkörper exakt auf dem Rand der Glasscheibe entlang gefahren werden muß. Das Anfahren an die scharfe Glaskante ist nicht unproblematisch, da hierbei sowie auch beim Überfahren der Endkante ein sehr hoher Schleifkörperverschleiß hervorgerufen wird. Bei allen Vorrichtungen und Anlagen muß der Schleifkörper, der durch das Anfahren bzw. Überfahren der Glaskanten unrund wird, regelmäßig abgerichtet werden.

Sämtliche teil- oder vollautomatischen Vorrichtungen und Anlagen entschichten lediglich gerade bzw. ebene und rechtwinklig zueinander stehende Glaskanten. Nichtrechtwinklige geradlinige Glaskanten oder beliebig gekrümmte Glaskanten müssen mit manuellen Vorrichtungen entweder vertikal oder horizontal abgefahren werden. Die beliebigen Konturen müssen notwendigerweise mit einer mechanischen Vorrichtung abgetastet werden, damit auch tatsächlich der erforderliche gleichmäßige Randstreifen von etwa 10mmm rückstandsfrei entfernt wird.

Von weiterem Nachteil ist der notwendige separate Fertigungsvorgang an jeder einzelnen zu entschichtenden Scheibe, für den die Gesamtproduktionslinie zum Waschen und Zusammenbauen von Isolierglaseinheiten mit einer speziellen Randentschichtungsstation auszustatten ist. Integrierte Randentschichtungsvorrichtungen bedeuten pro Linie erhebliche zusätzliche Investitionskosten. Aus diesem Grund versucht man, spezielle Isolierglaslinien für Funktionsgläser aufzubauen, was wiederum einen zusätzlichen Sortieraufwand und umständlichen Materialfluß bedeutet.

Als Alternative zum Abschleifen der Beschichtungen bei Einzelscheiben ist vorgeschlagen worden, mittels Gasbrennern auf Glasrohtafeln zu entschichten (DE 34 03 682 C1). Nach diesem Stand der Technik ist an einer verfahrbaren Brücke ein an der Brücke verfahrbarer Werkzeugschlitten angeordnet, der eine Schneidvorrichtung mit einem Schneidkopf und einem Schneidrädchen lagert. In Bewegungsrichtung gesehen ist seitlich am Schneidkopf eine Mikrogasbrennereinrichtung gelagert. Bei einer Geschwindigkeit des Schneidkopfes zwischen 25 bis 30 m pro Minute wird in einem Arbeitsgang mit dem Schneidrädchen geschnitten und mit den Brennern zu beiden Seiten der Schneidspur hinter dem Schneidrädchen entschichtet. Ein am Werkzeugschlitten abgestützter Schwenkmechanismus gestattet das Verschwenken der Gasbrennereinrichtung um eine horizontale Achse.

Dieser Stand der Technik beinhaltet eine Vielzahl von Nachteilen. So sind durch die thermische Einwirkung nur einige der üblicherweise verwendeten Schichten auflösbar. Beim Abflämmen entstehen Rückstände, die zum Beispiel mit einem Abstreiffilz entfernt werden müssen. Ferner ist von entscheidendem Nachteil, daß die Gläser durch die Wärmebeaufschlagung beschädigt werden können. Es muß daher dafür gesorgt werden, daß die Flammen stets schnell wieder von der Glasoberfläche weggerichtet werden, wenn die Schneidvorrichtung stillsteht. Wenn komplizierte Verfahrwege vorliegen und der Werkzeugschlitten häufig angehalten und neu angefahren und der Schneidkopf ausgerichtet werden muß, ist eine entsprechende Steuerung aufwendig und kritisch, und es ist außerordentlich schwierig, thermisch bedingte Gefügeänderungen im Glas zu vermeiden.

In der Druckschrift wird beiläufig erwähnt, daß das Entschichten auch durch geeignete mechanische Abtragevorrichtungen erfolgen kann. Wie dies zu bewerkstelligen ist, wird nicht offenbart.

Der Erfindung liegt die Aufgabe zugrunde, ein verbessertes Verfahren und verbesserte Vorrichtungen zu dessen Durchführung anzugeben, das den Sortiervergang vereinfacht.

Diese Aufgabe wird durch die Patentansprüche 1 sowie 6, 7, und 10 gelöst. Erfindungsgemäß erbringt die vorherige Entschichtung in Verbindung mit dem Einsatz einer Abschleifvorrichtung zum Entschichten einen entscheidenden technischen Fortschritt.

Zunächst einmal kann die Geschwindigkeit des verwendeten Werkzeugkopfes mittels einer Steuereinheit auf für beide Vorgänge optimale Werte eingestellt werden. Dabei wird in einem ersten Arbeitsgang beispielsweise mit 30 bis 40 m/min abgeschliffen, wohingegen das Glas mit einer vergleichsweisen schnelleren Geschwindigkeit von 50 bis 80 m/min geschnitten wird.

Durch die getrennte Halterung und Führung von Schneid- und Schleifwerkzeug ist es insbesondere möglich, beide Werkzeuge beliebig drehbar zu lagern, so daß nicht nur gerade Konturen in X- und Y-Richtung abgefahren werden können, sondern beliebig gerundete Muster entschichtet bzw. geschnitten werden können, sondern beliebig gerundete Muster entschichtet bzw. geschnitten werden können.

Schneid- und Entschichtungsvorgang erfolgen vorteilhafterweise in einer einzigen Station der Fertigungsstraße.

Die getrennte Benutzung des Werkzeugs hat auch den Vorteil, daß entlang von Hilfsschnittlinien, die zum Aufbrechen von Glas an komplizierten Kanten nötig sind, nicht auch abgeschliffen wird.

Schwierigkeiten beim Richtungswechsel und damit verbundenem Herunterfahren der Geschwindigkeit auf Null wie beim Abflämmen werden durch das Abschleifen vermieden. Es kann beliebig angehalten und die Geschwindigkeit verlangsamt oder beschleunigt werden. Es ist auch unschädlich, wenn bei einem Richtungswechsel über einen bereits entschichteten Bereich nochmals hinweggefahren wird.

Ferner kann konturgenau angefahren und angehalten werden. Dies ist mit Brennern nicht möglich, bei denen es bei aneinanderstoßenden Schnitten zu Wärmeüberschlagungen in den nicht zu entschichteten Bereichen kommt. Auch ist es bei Brennern zur Vermeidung von Wärmespannungen unbedingt erforderlich, mit konstanter Geschwindigkeit zu entschichten. Ansonsten müßte man den Abstand Brenner/Glasoberfläche ändern, wodurch sich wegen des geänderten Anstellwinkels Flamme/Glas die abgebrannte Fläche ändern würde.

Erfindungsgemäß kann ferner ein dem Schneidrädchen zugeführtes Schneidmittel keine Probleme beim vorausgehenden Entschichten hervorrufen.

Ferner wird in der Erfindung vom bisherigen, eingangs erwähnten Prinzip der Randentschichtung durch Abschleifen der bereits fertig zugeschnittenen Scheiben abgegangen und es werden die Glasrohtafeln vor dem Aufteilen in die Einzelscheiben in den Bereichen entschichtet, in denen auch die Anritzlinien oder Konturen für die spätere Trennung liegen. Hierdurch ergeben sich beträchtliche Vorteile und Verbesserungen.

Da die Randentschichtung auf den Rohtafeln erfolgt, ist generell ein geringerer Handhabungsaufwand notwendig als bei der Randentschichtung von Einzelscheiben. Zudem ist eine deutliche Verbesserung der Genauigkeit erzielbar.

Ferner ist es möglich, sowohl das Anritzen bzw. Schneiden der Einzelscheiben als auch die erforderliche Entschichtung in einer einzigen Station der Fertigungslinie durchzuführen. Die Glasrohtafel, vorzugsweise mit der maximal lieferbaren Abmessung von 6,100 x 3,250 m, wird in dieser Station auf einer horizontalen oder vertikalen Auflagefläche fixiert und die gewünschten Konturbereiche der Einzelscheiben werden mit einem Schleifkörper überfahren. Die Glasrohtafel kann nach der Entschichtung in den überfahrenen Bereichen unverändert in ihrer Position liegen- bzw. stehenbleiben, um anschließend mit dem Glas-Schneidrädchen denselben Verfahrweg wie beim Abschleifen nachzufahren. Danach erfolgt das Aufbrechen der Scheiben.

Auf diese Weise ist es nicht nur möglich, in der Fertigungslinie eine separate Entschichtungsstation einzusparen, sondern darüberhinaus möglich, eine sehr ähnliche Vorrichtung wie zum Schneiden der Tafeln zu benutzen und z.B. dasselbe Steuerprogramm und dieselbe Bewegungseinrichtung bei lediglich ausgetauschtem Werkzeug zu benutzen. Für beschichtete und unbeschichtete Scheiben ist dieselbe Fertigungslinie und dieselbe Trenn/Entschichtungsstation verwendbar, wobei bei letzteren lediglich ein Arbeitsgang ausgelassen wird. Die Sortierung zu den Paaren bzw. Mehrfachgruppen von Einzelscheiben für die Mehrfachverglasung oder Isolierverglasung kann direkt nach dem Entschichtungs/Zuschneidevorgang erfolgen. Hierdurch werden ein wesentlich geringerer Sortieraufwand und ein besserer Materialfluß erzielt.

Durch den Wegfall einer speziellen Randentschichtungsstation in den Fertigungslinien ergibt sich eine erhebliche Platzeinsparung bei den Fertigungsflächen. Auch sind die Installationskosten hierduch verringert.

Es können wahlweise beliebige Formen und Konturen erstellt bzw. bearbeitet (entschichtet) werden, indem hierzu beispielsweise CNC-gesteuert über geeignete Bewegungseinrichtungen auf die den Schleifkörper tragende Vorrichtung eingewirkt wird. Zudem ist die Qualität der Entschichtung verbessert, da mit dem Schleifkörper stets nur auf der glatten Glasfläche gefahren wird. Hierdurch ist auch ein besser kontrollierbarer und steuerbarer Schleifvorgang möglich. Die Qualität der keine scharfen Kanten mehr an- und überfahrenden Schleifkörper bleibt unverändert erhalten. Auch durch den geringeren Schleifkörperverschleiß werden die Kosten gesenkt.

Es fällt kein Schleifstaub mehr im Sauberbereich von nachgeschalteten Fertigungsprozessen an. Dies ist von Bedeutung, da zur Vermeidung jeglicher Verschmutzung der Scheibenzwischenräume die Isoliergläser in einem Reinraum herzustellen sind.

Vorzugsweise weist der Schleifkörper die doppelte Breite (20mm) der sonst üblichen Breite von 10mm auf, die der im allgemeinen für den Randverbund vorgenommenen Entschichtungsbreite entspricht. So können in einem Arbeitsgang zwei spätere Einzelscheibenkanten entschichtet werden, wobei die Trennlinie in der Mitte des Entschichtungsbereichs verläuft. Hierdurch ergeben sich wesentlich höhere Leistungen als beim Entschichten der einzelnen Kanten.

Es sind Vorrichtungen zum Entschichten und Schneiden mit einer oder auch zwei Bearbeitungsbrücken möglich, wobei beide Vorgänge aufeinanderfolgend mit vorteilhaft angepaßter Geschwindigkeit ausgeführt werden.

Schließlich sind auch getrennte Vorrichtungen für beide Vorgänge möglich.

Im folgenden wird die Erfindung anhand der Zeichnungen näher erläutert. Es zeigen
Fig.1 eine Teilansicht einer erfindungsgemäßen Vorrichtung zum Entschichten,
Fig.2 ein Beispiel einer erfindungsgemäß entschichteten Glasrohtafel,
Fig.3 ein Ausführungsbeispiel einer nicht erfindungsgemäßen Vorrichtung mit zwei Brücken für die Bewegung der Werkzeuge über die Glasrohtafel,
Fig.4A, 4B, 4C drei modifizierte Ausführungsbeispiele der erfindungsgemäßen Vorrichtung,
Fig.5 einen üblichen Randverbund einer Isolierverglasung mit einer beschichteten Glasscheibe und
Fig.6 und Fig.7 schematische Ansichten von Entschichtungsvorrichtungen aus dem Stand der Technik.

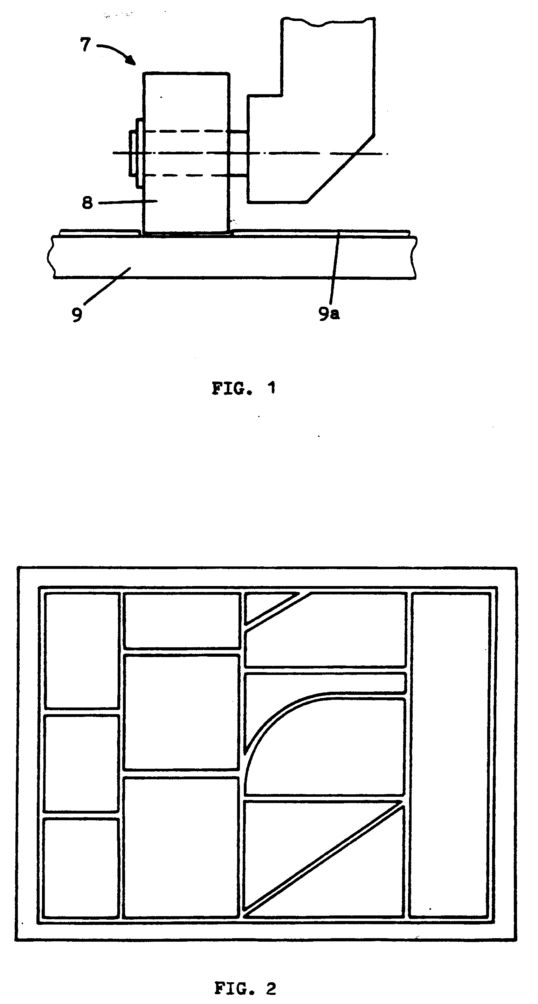

In der Fig.1 ist eine erfindungsgemäß verwendete Schleifvorrichtung 7 mit einem Schleifkörper 8 von etwa 20mm Breite dargestellt, der über eine Glasrohtafel 9 geführt wird und auf dieser die Beschichtung 9a in der doppelten üblichen Breite für die Randverbundpräparation entfernt. Die Tafel 9 liegt dabei vorzugsweise horizontal auf der Filzauflage der Schneidstation, wobei die Schleifvorrichtung z.B. zusätzlich oder alternativ zum Schneidwerkzeug für das Anritzen an einer Brücke befestigt ist, an der sonst das Schneidwerkzeug gehaltert ist und über die Rohtafel bewegt wird. Vorzugsweise computergesteuert wird die Schleifvorrichtung 7 über die Rohtafel 9 gefahren, wobei beispielsweise ein in Fig.2 skizziertes Bahnmuster für unterschiedlichste Scheibenformen möglich ist. Auf der Rohtafel ist dabei nicht mit dem Schleifkörper über den Rand der Glastafel gefahren und es ist möglich, einen gewissen Abstand zur Tafelkante zu wahren. Beliebige auch runde Konturen sind durch eine drehbare Halterung der beiden Werkzeuge möglich. Die Geschwindigkeit beim Anschleifen kann zum Abschleifen komplizierter Bereichsmuster beliebig variert werden.

Statt der vollautomatischen Vorrichtung ist z.B. auch eine halbautomatische Lösung möglich.

Ist der Abschleifvorgang beendet, so wird vom Schneidwerkzeug anschließend dieselbe Kontur durch die Mitte der entschichteten Streifen nachgefahren.

Die Vorrichtungen können je nach Materialfluß auch in vertikaler Ausrichtung ausgeführt werden.

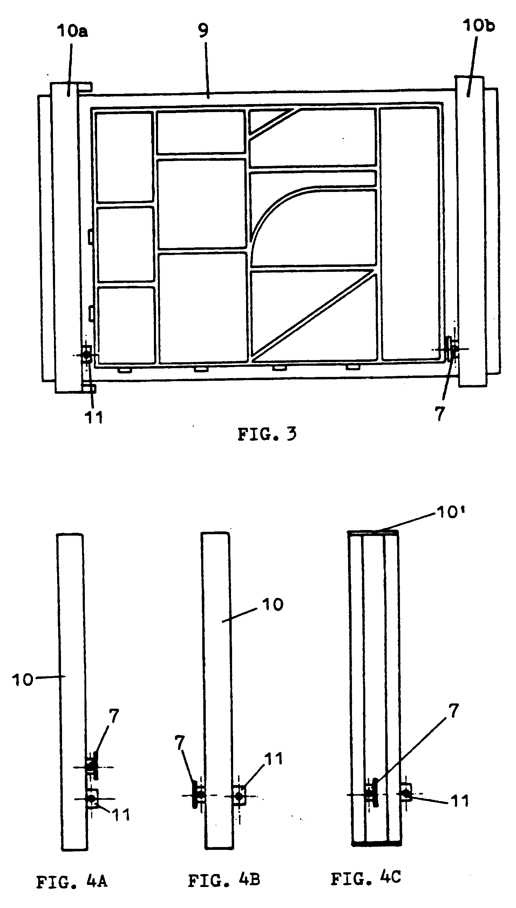

Die Fig.3 zeigt eine nicht erfindungsgemäße Vorrichtung mit zwei Brücken 10a und 10b, wobei an ersterer das Schneidwerkzeug 11 und an letzterer die Schleifvorrichtung 7 angebracht sind. Die Brücken befinden sich auf entgegengesetzten Seiten der Vorrichtung und können je nach gewünschtem Bearbeitungsvorgang eingesetzt werden. So können sowohl beschichtete als auch unbeschichtete Glasscheiben für eine Mehrfachverglasung mit dieser Vorrichtung präpariert werden.

Um die Mechanik, Antriebs- und Steuerungstechnik optimal auszunutzen, können die beiden Bearbeitungsbrücken gekoppelt werden. Beim Schleifvorgang werden beide Bearbeitungsbrücken gekoppelt und mit der durch die Kopplung gebildeten Gesamtbrücke werden dann die Konturen abgefahren. Während des Schleifvorgangs bleibt das Schneidwerkzeug 11 außer Betrieb. Nach Beendigung des Schleifvorgangs wird die Bearbeitungsbrücke 10b mit der Schleifvorrichtung 7 in einem Bahnhof abgestellt und die Schneidbrücke 10a fährt mit dem Schneidwerkzeug die vorher abgeschliffenen Konturen mittig nach. Durch diese Art der Anordnung und Ausnutzung der beiden ge- bzw. entkoppelten Brücken benötigt man nur einen Brückenantrieb.

Die Fahrwege, d.h. die Schleif- bzw. Schnittmuster werden durch die Bedienungsperson vor dem obigen Vorgang in die Steuerung eingegeben. Wie üblich erfolgen zur optimalen Rohglasausnutzung auch entsprechende Verschnittoptimierungen durch die Arbeitsvorbereitung und es können dann die optimierten Schneidpläne mit beliebigen Datenträgern in die Steuerung eingegeben werden.

Während der gesamten Bearbeitung der Rohtafel bleibt diese lagefixiert liegen. Die Schleif- und Schneidgenauigkeit werden optimiert und entsprechen den gegenwärtigen Genauigkeitsanforderungen.

Der Vorteil dieser Zweibrückenanordnung liegt darin, daß der Schneidvorgang mit optimaler (relativ hoher) Geschwindigkeit ausführbar ist. Die gesamte Mechanik und Antriebstechnik kann minimiert werden, da die Masse der Schleifbrücke 10b während des Schneidvorgangs nicht mitbewegt werden muß.

Eine folgende Glasrohtafel ohne eine Beschichtung mit demselben Muster für die Kombination zu einer üblichen Isolierglasfunktion mit nur einer beschichteten Scheibe kann mit dem gleichen Schneidprogramm bearbeitet werden. Bei Dreifachverglasung wird die Vorrichtung ein drittes Mal mit einer beschichteten oder auch unbeschichteten Rohtafel bestückt.

Das Sortieren von beschichteten und unbeschichteten Einzelscheiben erfolgt unmittelbar nach dem Aufbrechen und die beiden (oder auch mehr) Einzelscheiben stehen dann ohne umständlichen Sortier- und Handhabungsaufwand für den weiteren Fertigungsprozeß paarweise zur Verfügung.

Die Fig.4A zeigt eine Trägerbrücke 10 mit einseitig hintereinander angeordneter Schneid- und Schleifvorrichtung 11 und 7, die über je einen Halter an der Brücke angebracht sind. Beide Werkzeugträger sind gekoppelt und mit einem Verfahrantrieb für die X-Achse versehen. Der Einsatz der beiden Werkzeuge kann beliebig gesteuert werden. Erfindungsgemäß werden beide Werkzeuge bzw. Vorrichtungen nacheinander betätigt. Durch eine Anordnung des Schneidrädchens hinter der Schleifvorrichtung ist es zwar möglich, auch in einem Arbeitsgang zunächst abzuschleifen und unmittelbar danach zu schneiden, jedoch ist es insbesondere im Hinblick auf komplizierte Muster aus den weiter oben genannten Gründen vorzuziehen, die beiden Vorgänge zu entkoppeln.

Die Fig.4B zeigt eine Brücke 10 mit jeweils einem auf jeder Seite links und rechts angeordneten Werkzeugträger für die Schleifvorrichtung 7 bzw. das Schneidwerkzeug 11. Wiederum sind beide Werkzeugträger über einen Antrieb in X-Achsenrichtung bewegbar und der Einsatz der Werkzeuge erfolgt aufeinanderfolgend mit optimierter Geschwindigkeit.

Die in Fig.4C gezeigte Doppelbrücke 10' weist zwischen den beiden Brückenteilen den Werkzeugträger mit der Schleifvorrichtung 7 auf und an einer Seite den Werkszeugträger für das Schneidwerkzeug 11.

Je nach Betriebsablauf und gewünschten Kapazitäten können auch getrennte Vorrichtungen zum Schneiden und Entschichten vorgesehen werden, wobei die Rohtafel in einer entsprechend nur mit Schleifvorrichtung ausgestatteten Anlage entschichtet wird und dann zur Anlage zum Schneiden transportiert und dort neu positioniert und geschnitten wird.

Falls aus der Rohtafel nur einige Scheiben mit entschichtetem Randbereich zu gewinnen sind, kann die Abschleifbreite auch auf nur etwa 10mm eingestellt sein, wobei dann am linken oder rechten Rand des entschichteten Bereichs getrennt wird.

## Patentansprüche

1. Verfahren zum Vorbereiten von Glasscheiben zur Herstellung einer Mehrfachverglasung, die mindestens eine beschichtete Glasscheibe aufweist, wobei eine beschichtete Glasrohtafel (9) in einzelne Glasscheiben durch Schneiden entlang einer vorgegebenen Aufteilungskontur und Brechen in den Schneidspuren aufgeteilt wird und wobei vor dem Brechen mit einer mechanischen Abtragevorrichtung im Bereich der Aufteilungskontur entschichtet wird,
**dadurch gekennzeichnet,** daß
a) als Abtragevorrichtung eine Schleifvorrichtung (7) mit einem Schleifkörper (8) verwendet wird, mit dem entlang der Aufteilungskontur gefahren und über eine vorgegebene Breite entschichtet wird, und daß nachfolgend mit einer Schneidvorrichtung (11) in den entschichteten Bereichen geschnitten wird,
b) eine nicht beschichtete Glasrohtafel unter Auslassung des Entschichtungsschritts in derselben Vorrichtung fixiert und aufgeteilt wird,
c) die beschichteten, im Randbereich entschichteten und die nichtbeschichteten Glasscheiben unmittelbar nach dem Aufteilen für Mehrfachverglasungseinheiten zu Mehrfachgruppen sortiert werden.

2. Verfahren nach Anspruch 1,
**dadurch gekennzeichnet,**
daß mit einer optimierten Geschwindigkeit entschichtet und mit einer anderen optimierten Geschwindigkeit geschnitten wird.

3. Verfahren nach Anspruch 1 oder 2,
**dadurch gekennzeichnet,**
daß auf einer Breite entschichtet wird, die doppelt so groß wie die erforderliche Breite des zu entschichteilden Scheibenrandes ist, und daß die Aufteilungskontur durch die Mitte der entschichteten Breite verläuft.

4. Verfahren nach einem der vorhergehenden Ansprüche,
**dadurch gekennzeichnet,**
daß die Glasrohtafel (9) horizontal oder vertikal fixiert wird und mit dem Schleifkörper (8) mittig über die Aufteilungskontur gefahren wird, auf der anschließend nach dem Entschichten mit der Schneidvorrichtung (11) entlanggefahren wird.

5. Verfahren nach einem der vorhergehenden Ansprüche 2 bis 4,
**dadurch gekennzeichnet,**
daß die Aufteilungskonturen computergesteuert mit Vorgabe der optimierten Geschwindigkeiten abgefahren werden.

6. Vorrichtung zur Durchführung des Verfahrens nach einem der Ansprüche 1 bis 5 mit
a) einer Halterungsvorrichtung, auf der eine Glasrohtafel fixierbar ist,
b) einer Bewegungseinrichtung in Form einer verfahrbaren Brücke (10),
c) einer Schneidvorrichtung (11), die an der Brücke verfahrbar angeordnet ist und mit der entlang einer vorgegebenen Aufteilungskontur geschnitten werden kann,
d) einer Abtragevorrichtung zum Abtragen der Beschichtung entlang der Aufteilungskontur,
e) Betätigungseinrichtungen zum Betätigen der Bewegungseinrichtung, der Schneidvorrichtung und der Abtragevorrichtung,
wobei
f) die Abtragevorrichtung eine Schleifvorrichtung (7) mit einem Schleifkörper (8) ist und
g) die Schleifvorrichtung (7) gegen die Schneidvorrichtung (11) austauschbar an der Brücke (10) angeordnet ist, so daß auch eine nicht beschichtete Glasrohtafel geschnitten werden kann.

7. Vorrichtung zur Durchführung des Verfahrens nach einem der Ansprüche 1 bis 5 mit
a) einer Halterungsvorrichtung, auf der eine Glasrohtafel fixierbar ist,
b) einer Bewegungseinrichtung in Form einer verfahrbaren Brücke (10),
c) einer Schneidvorrichtung (11), die an der Brücke verfahrbar angeordnet ist und mit der entlang einer vorgegebenen Aufteilungskontur geschnitten werden kann,
d) einer Abtragevorrichtung zum Abtragen der Beschichtung entlang der Aufteilungskontur,
e) Betätigungseinrichtungen zum Betätigen der Bewegungseinrichtung, der Schneidvorrichtung und der Abtragevorrichtung,
wobei
f) die Abtragevorrichtung eine Schleifvorrichtung (7) mit einem Schleifkörper (8) ist und
g) die Schleifvorrichtung (7) und die Schneidvorrichtung (11) hintereinander an der Brücke (10) angeordnet sind, wobei die Schneidvorrichtung unter Auslassung der Funktion der Schleifvorrichtung betätigbar ist.

8. Vorrichtung nach Anspruch 7,
**dadurch gekennzeichnet,**
daß die Schleifvorrichtung (7) vor der Schneidvorrichtung (11) angeordnet ist.

9. Vorrichtung nach Anspruch 7 oder 8,
**dadurch gekennzeichnet,**
daß die Schleifvorrichtung (7) und die Schneidvorrichtung (11) unabhängig voneinander arbeitend betätigbar sind.

10. Vorrichtung zur Durchführung des Verfahrens nach einem der Ansprüche 1 bis 5, mit
a) einer Halterungsvorrichtung, auf der eine Glasrohtafel fixierbar ist,
b) einer Bewegungseinrichtung in Form einer verfahrbaren Brücke (10),
c) einer Schneidvorrichtung (11), die an der Brücke verfahrbar angeordnet ist und mit der entlang einer vorgegebenen Aufteilungskontur geschnitten werden kann,
d) einer Abtragevorrichtung zum Abtragen der Beschichtung entlang der Aufteilungskontur,
e) Betätigungseinrichtungen zum Betätigen der Bewegungseinrichtung, der Schneidvorrichtung und der Abtragevorrichtung,
wobei
f) die Abtragevorrichtung eine Schleifvorrichtung (7) mit einem Schleifkörper (8) ist und
g) die Schleifvorrichtung (7) und die Schneidvorrichtung (11) nebeneinander an der Brücke (10) angeordnet und unabhängig voneinander arbeitend betätigbar sind, wobei die Schneidvorrichtung unter Auslassung der Funktion der Schleifvorrichtung betätigbar ist.

11. Vorrichtung nach Anspruch 10,
**dadurch gekennzeichnet,**
daß die Schleifvorrichtung (7) auf der einen Seite und die Schneidvorrichtung (11) auf der anderen Seite der Brücke (10) angeordnet sind.

12. Vorrichtung nach Anspruch 11,
**gekennzeichnet durch**
eine zwei Teilbrücken aufweisende Doppelbrücke (10'), an der die Schleifvorrichtung (7) und die Schneidvorrichtung (11) angeordnet sind.

13. Vorrichtung nach Anspruch 12,
**dadurch gekennzeichnet,**
daß zwischen den beiden Teilbrücken der Doppelbrücke (10') die Schleifvorrichtung (7) längs der Doppelbrücke (10') verfahrbar und auf einer Außenseite einer Teilbrücke der Doppelbrücke (10') die Schleifvorrichtung (11) separat längs der Doppelbrücke (10') verfahrbar angeordnet sind.

## Claims

1. Process for preparing glass panes for producing a multiple glazing having at least one coated glass pane, in which a coated glass sheet (9) is divided into individual glass panes by cutting along a predetermined dividing contour and breaking along the cuts, and in which, before breaking, the coating is removed from the area of the dividing contour by means of a mechanical stripping device,
**characterised in that**
a) the stripping device used is a grinding device (7) having a grinding element (8) which travels along the dividing contour and removes the coating over a predetermined width, and subsequently a cutting device (11) cuts into the regions from which the coating has been removed,
b) an uncoated glass sheet is fixed and divided while omitting the step of coating removal,
c) the coated glass panes that have had their coating removed from the edge zones and the uncoated glass panes are sorted into several groups immediately after being cut, to make up multiple glazing units.

2. Process according to Claim 1,
**characterised in that**
the coating is removed at an optimised speed and the cutting is carried out at a different optimised speed.

3. Process according to Claims 1 or 2,
**characterised in that**
the coating is removed to a width which is twice as large as the required width of the pane edge from which the coating is to be removed, and the dividing contour runs through the centre of the width from which the coating has been removed.

4. Process according to any of the preceding claims,
**characterised in that**
the glass sheet (9) is fixed horizontally or vertically and the grinding element (8) travels thereon centrally over the dividing contour, along which the cutting device (11) subsequently travels after the coating has been removed.

5. Process according to any of the preceding claims 2 to 4,
**characterised in that**
the dividing contours are followed under computer control, with prior input of the optimised speeds.

6. Device for carrying out the process according to any of Claims 1 to 5, having
a) a mounting device on which a glass sheet can be fixed,
b) a moving means in the form of a mobile bridge (10),
c) a cutting device (11) arranged such that it can move along the bridge and by means of which it is possible to cut along a predetermined dividing contour,
d) a stripping device for stripping the coating off along the dividing contour,
e) means for actuating the moving means, the cutting device and the stripping device,
such that
f) the stripping device is a grinding device (7) having a grinding element (8),
and
g) the grinding device (7) is arranged on the bridge (10) such that it can be replaced by the cutting device (11), so that an uncoated glass sheet can also be cut.

7. Device for carrying out the process according to any of Claims 1 to 5, having
a) a mounting device on which a glass sheet can be fixed,
b) a moving means in the form of a mobile bridge (10),
c) a cuffing device (11) arranged such that it can move along the bridge and by means of which it is possible to cut along a predetermined dividing contour,
d) a stripping device for stripping the coating off along the dividing contour,
e) means for actuating the moving means, the cuffing device and the stripping device,
such that
f) the stripping device is a grinding device (7) having a grinding element (8),
and
g) the grinding device (7) and the cuffing device (11) are arranged one behind the other on the bridge (10), such that the cuffing device can be actuated while the function of the grinding device is omitted.

8. Device according to Claim 7,
**characterised in that**
the grinding device (7) is arranged in front of the cutting device (11).

9. Device according to Claims 7 or 8,
**characterised in that**
the grinding device (7) and the cuffing device (11) can be actuated so as to operate independently of one another.

10. Device for carrying out the process according to any of Claims 1 to 5, having
a) a mounting device on which a glass sheet can be fixed,
b) a moving means in the form of a mobile bridge (10),
c) a cutting device (11) arranged such that it can move along the bridge and by means of which it is possible to cut along a predetermined dividing contour,
d) a stripping device for stripping the coating off along the dividing contour,
e) means for actuating the moving means, the cutting device and the stripping device,
such that
f) the stripping device is a grinding device (7) having a grinding element (8),
and
g) the grinding device (7) and the cutting device (11) are arranged next to one another on the bridge (10) and can be actuated so as to operate independently of one another, such that the cutting device can be actuated while the function of the grinding device is omitted.

11. Device according to Claim 10,
**characterised in that**
the grinding device (7) is arranged on one side of the bridge (10) and the cutting device (11) is arranged on the other side.

12. Device according to Claim 11,
**characterised in that**
it comprises a double bridge (10') which has two component bridges on which the grinding device (7) and the cutting device (11) are arranged.

13. Device according to Claim 12,
**characterised in that**
the grinding device (7) can move along the double bridge (10') between the two component bridges thereof and the cutting device (11) is arranged on an outer side of a component bridge of the double bridge (10') such that it can move separately along the double bridge (10').

## Revendications

1. Procédé de préparation de vitres pour la fabrication d'un vitrage multiple comprenant au moins une vitre à couche, dans lequel un panneau brut de verre à couche (9) est divisé en vitres individuelles par coupe le long d'un contour de séparation prédéterminé et par cassure dans les lignes de coupe et dans lequel, avant la cassure, on dénude de la couche avec un dispositif d'enlèvement mécanique dans la zone du contour de séparation, caractérisé en ce que
a) on utilise, comme dispositif d'enlèvement, un dispositif de meulage (7) comprenant une meule (8) avec laquelle on passe le long du contour de séparation et on dénude sur une largeur prédéterminée, et en ce qu'on coupe ensuite au moyen d'un dispositif de coupe (11) dans les zones dénudées,
b) un panneau brut de verre sans couche est fixé et divisé dans le même dispositif, sans procéder à la phase de dénudation,
c) les vitres à couche, dénudées dans la zone des bords, et les vitres sans couche sont classées aussitôt après la séparation en groupes multiples pour former des unités de vitrage multiple.

2. Procédé selon la revendication 1,
caractérisé en ce qu'on dénude à une vitesse optimisée et qu'on coupe à une autre vitesse optimisée.

3. Procédé selon la revendication 1 ou 2,
caractérisée en ce qu'on dénude sur une largeur deux fois plus grande que la largeur nécessaire du bord de la vitre à dénuder, et en ce que le contour de séparation passe par le milieu de la largeur dénudée.

4. Procédé selon l'une des revendications précédentes,
caractérisée en ce que le panneau brut en verre (9) est fixé horizontalement ou verticalement et en ce qu'on fait passer la meule (8) centrée sur le contour de séparation, sur lequel on fait ensuite passer le dispositif de coupe (11) après la dénudation.

5. Procédé selon l'une des revendications 2 à 4 précédentes,
caractérisé en ce que les contours de séparation sont parcourus sous commande d'un ordinateur avec présélection des vitesses optimisées.

6. Dispositif pour la mise en oeuvre du procédé selon l'une des revendications 1 à 5, comprenant
a) un dispositif de fixation sur lequel un panneau brut de verre peut être immobilisé,
b) un dispositif de déplacement sous la forme d'un pont mobile (10),
c) un dispositif de coupe (11) agencé mobile sur le pont et avec lequel il est possible de couper le long d'un contour de séparation prédéterminé,
d) un dispositif d'enlèvement pour enlever la couche le long du contour de séparation,
e) des dispositifs de commande pour actionner le dispositif de déplacement, le dispositif de coupe et le dispositif d'enlèvement,
f) le dispositif d'enlèvement étant un dispositif de meulage (7) comprenant une meule (8) et
g) le dispositif de meulage (7) étant agencé sur le pont (10) de manière à pouvoir être échangé avec le dispositif de coupe (11), de telle sorte qu'un panneau brut de verre sans couche peut aussi être découpé.

7. Dispositif pour la mise en oeuvre du procédé selon une des revendications 1 à 5, comprenant
a) un dispositif de fixation sur lequel un panneau brut en verre peut être immobilisé,
b) un dispositif de déplacement sous la forme d'un pont mobile (10),
c) un dispositif de coupe (11) qui est agencé mobile sur le pont et avec lequel il est possible de couper le long d'un contour de séparation prédéterminé,
d) un dispositif pour enlever la couche le long du contour de séparation,
e) des dispositifs de commande pour actionner le dispositif de déplacement, le dispositif de coupe et le dispositif d'enlèvement,
f) le dispositif d'enlèvement étant un dispositif de meulage (7) comprenant une meule (8) et
g) le dispositif de meulage (7) et le dispositif de coupe (11) étant agencés l'un derrière l'autre sur le pont (10), le dispositif de coupe pouvant être commandé avec omission du fonctionnement du dispositif de meulage.

8. Dispositif selon la revendication 7,
caractérisé en ce que le dispositif de meulage (7) est agencé en avant du dispositif de coupe (11).

9. Dispositif selon la revendication 7 ou 8,
caractérisé en ce que le dispositif de meulage (7) et le dispositif de coupe (11) peuvent être commandés pour travailler indépendamment l'un de l'autre.

10. Dispositif pour la mise en oeuvre du procédé selon une des revendications 1 à 5, avec
a) un dispositif de fixation sur lequel un panneau brut en verre peut être immobilisé,
b) un dispositif de déplacement sous la forme d'un pont mobile (10),
c) un dispositif de coupe (11) agencé mobile sur le pont et avec lequel il est possible de couper le long d'un contour de séparation prédéterminé,
d) un dispositif d'enlèvement pour enlever la couche le long du contour de séparation,
e) des dispositifs de commande pour actionner le dispositif de déplacement, le dispositif de coupe et le dispositif d'enlèvement,
f) le dispositif d'enlèvement étant un dispositif de meulage (7) comprenant une meule (8) et
g) le dispositif de meulage (7) et le dispositif de coupe (11) étant agencés l'un à côté de l'autre sur le pont (10) et pouvant être commandés pour travailler indépendamment l'un de l'autre, le dispositif de coupe pouvant être actionné avec omission du fonctionnement du dispositif de meulage.

11. Dispositif selon la revendication 10,
caractérisé en ce que le dispositif de meulage (7) est agencé sur un côté du pont (10) et le dispositif de coupe (11) sur e l'autre côté dudit pont.

12. Dispositif selon la revendication 11,
caractérisé par un pont double (10') présentant deux ponts partiels, sur lequel le dispositif de meulage (7) et le dispositif de coupe (11) sont agencés.

13. Dispositif selon la revendication 12,
caractérisé en ce que le dispositif de meulage (7) est situé entre les deux ponts partiels du pont double (10'), de manière à pouvoir se déplacer le long du pont double (10'), et le dispositif de meulage (11) est agencé sur un côté extérieur d'un pont partiel du pont double (10'), de manière à pouvoir se déplacer séparément le long du pont double (10').
